# EUROPÄISCHE PATENTSCHRIFT

(11) **EP 1 514 666 B1**
(45) Veröffentlichungstag und Bekanntmachung des Hinweises auf die Patenterteilung: **05.08.2009**
(21) Anmeldenummer: 04405545.7
(22) Anmeldetag: 01.09.2004
(51) Int. Cl.: B29C 45/73, B29C 45/26

(54) **Spritzgusswerkzeug für die Herstellung von scheibenförmigen Informationsträgern**
Mould for manufacturing disc-shaped information carriers
Moule pour la fabrication de supports d'informations en forme de disques

(30) Priorität: 08.09.2003 CH 15282003
(43) Veröffentlichungstag der Anmeldung: 16.03.2005
(73) Patentinhaber: AWM Mold Tech AG, 5630 Muri (CH)
(72) Erfinder: Gabriel, Markus, 5630 Muri (CH)
(74) Vertreter: Bremi, Tobias Hans

(56) Entgegenhaltungen:
- FR-A- 2 159 231
- GB-A- 2 006 666
- US-A- 1 582 704
- PATENT ABSTRACTS OF JAPAN Bd. 1997, Nr. 08, 29. August 1997 (1997-08-29) & JP 09 094858 A (MITSUBISHI MATERIALS CORP), 8. April 1997 (1997-04-08)
- PATENT ABSTRACTS OF JAPAN Bd. 013, Nr. 528 (M-898), 24. November 1989 (1989-11-24) & JP 01 216807 A (TOSHIBA CORP), 30. August 1989 (1989-08-30)
- PATENT ABSTRACTS OF JAPAN Bd. 014, Nr. 049 (M-0927), 29. Januar 1990 (1990-01-29) & JP 01 278322 A (MITSUBISHI ELECTRIC CORP), 8. November 1989 (1989-11-08)

## Beschreibung

### TECHNISCHES GEBIET

Die vorliegende Erfindung bezieht sich auf das Gebiet der Spritzgusstechnik. Sie betrifft ein Spritzgusswerkzeug für die Herstellung von scheibenförmigen Formlingen, insbesondere in Form von Informationsträgern wie CDs und/oder DVDs, welches Spritzgusswerkzeug zur Bildung einer Spritzgussform eine erste und eine zweite Spiegelplatte umfasst, die einander gegenüberliegen und zum Öffnen und Schliessen der Form relativ zueinander beweglich sind. Konkret betrifft die vorliegende Erfindung dabei ein Spritzgusswerkzeug, bei welchem Mittel zur aktiven Temperierung wenigstens einer der Spiegelplatten vorgesehen sind.

Ein solches Spritzgusswerkzeug ist z.B. aus der Druckschrift WO-Al-99/37471 oder aus der EP-A-1120221 bekannt.

### STAND DER TECHNIK

Zur Herstellung von optisch lesbaren Informationsträgern wie Audio-CDs, CD-ROMs, Video-CDs oder DVDs werden Spritzgusswerkzeuge eingesetzt, die mittels zweier gegenüberliegender, relativ zueinander beweglicher (zylindrischer) Spiegelplatten eine Spritzgussform bilden. Auf einer der beiden Spiegelplatten ist üblicherweise ein dünner, scheibenförmiger Stamper lösbar befestigt, der beim Spritzgiessen des sich formenden Informationsträgers die die Information enthaltenden Spuren einprägt. Am Aussenrand wird die Spritzgussform häufig durch einen Formring begrenzt, der die eine Spiegelplatte konzentrisch umgibt.

Der Formring steht über die ebene Formfläche der von ihm umschlossenen Spiegelplatte über und ist relativ zu dieser Spiegelplatte in axialer Richtung verschiebbar. Wird die Spritzgussform durch eine axiale Bewegung der beiden Spiegelplatten aufeinander zu geschlossen, setzt aufgrund des Überstandes der Formring auf der gegenüberliegenden Spiegelplatte auf und schliesst die Form, während die von ihm konzentrisch umschlossene Spiegelplatte von der gegenüberliegenden Spiegelplatte einen vorbestimmten Abstand hat. In den so gebildeten scheibenförmigen Hohlraum wird dann unter hohem Druck der heisse Kunststoff eingespritzt. Nachdem der Hohlraum der Spritzgussform gefüllt ist, wird - um eine hohe Qualität des Informationsträgers zu erreichen - gegebenenfalls die vom Formring umschlossene Spiegelplatte ein Stück weit auf die andere Spiegelplatte zubewegt, während der Formring aufgrund des Anschlags auf der gegenüberliegenden Spiegelplatte ortsfest bleibt (siehe dazu Fig. 2 und 3 der eingangs genannten WO-A1-99/37471).

Die Temperierung der Spiegelplatten kann bei derartigen Werkzeugen aktiv geschehen, wobei es einerseits durch diese Temperierung möglich ist, die Spiegelplatten zur Vorbereitung auf eine bestimmte erhöhte Temperatur zu bringen (Aufwärmung), gegebenenfalls nur innerhalb bestimmter Abschnitte des Fertigungsprozesses, und wobei es andererseits insbesondere möglich ist, die durch den heissen eingeschossenen Kunststoff in die Form eingetragene Wärme abzuführen (Kühlung).

Die Möglichkeiten einer derartigen Temperierung sind beispielsweise in der EP-A-0899075 beschrieben, sowie auch in der EP-A-0864411. Dabei wird typischerweise so vorgegangen, dass in der Masse der Spiegelplatten Kanäle vorgesehen werden, in welchen ein entsprechendes Medium geführt wird. Derartige Kanäle werden dabei spiralförmig in der Spiegelplatte geführt. Um unterschiedliche Leistungen in unterschiedlichen radialen Bereichen der Spiegelplatten zu erlauben, ist es möglich, über unterschiedliche Zuführungen von Kühlmedium unterschiedliche Bereiche der Spiralen verschieden anzusteuern.

Problematisch an derartigen Lösungen ist unter anderem, dass normalerweise infolge der geforderten hohen Homogenität der Temperaturverteilung auf der Spiegelplatte eine Vielzahl von dünnen und vergleichsweise nahe beieinander angeordneten Kanälen verlangt wird, und dass entsprechend lange Kanäle resultieren. Dies führt zu einer für die heutigen Zykluszeiten zu grossen Ansprechzeit der Kühlung.

Beispielsweise wird in der GB-A-2 006 666 ein Spritzgusswerkzeug für die Herstellung von scheibenförmigen Formlingen beschrieben, bei dem vier einzelne Kühlkanäle innerhalb einer Gussplatte angeordnet sind. Die Kühlkanäle verlaufen spiralförmig in zwei oder drei Umläufen durch die Gussform. Jeder der spiralförmigen Kühlkanäle weist eine eigene Zuführung und Abführung für das Kühlmedium auf, die jeweils von unterschiedlichen Seiten an die Gussform angeschlossen werden.

Die US 1,582,704 zeigt ein Heiz- und Kühlsystem für die Herstellung von Langspielplatten. Es werden zwei scheibenförmige runde Gusshälften verwendet, die mit Kanälen durchzogen sind, welche am äusseren Rand der Gussform beginnen und spiralförmig bis zum inneren Bereich der Gussform geführt werden. Die Kanäle führen knapp zwei Umläufe innerhalb der Gussform aus.

### DARSTELLUNG DER ERFINDUNG

Es ist daher Aufgabe der Erfindung, ein Spritzgusswerkzeug für die Herstellung von scheibenförmigen Informationsträgern zu schaffen, welches die Nachteile bekannter Spritzgusswerkzeuge vermeidet und sich insbesondere aber nicht ausschliesslich durch eine bessere Prozessstabilität, eine bessere Qualität der Formlinge und kürzere Wartezeiten beim Anfahren respektive die Möglichkeit schnellerer Zykluszeiten auszeichnet. Konkret handelt es sich dabei um die Verbesserung eines Spritzgusswerkzeuges für die Herstellung von scheibenförmigen Formlingen, insbesondere in Form von Informationsträgern wie CDs und/oder DVDs, welches Spritzgusswerkzeug zur Bildung einer Spritzgussform eine erste und eine zweite Spiegelplatte umfasst, die einander gegenüberliegen und zum Öffnen und Schliessen der Form relativ zueinander beweglich sind. Ausserdem sind Mittel zur aktiven Temperierung wenigstens einer der Spiegelplatten vorgesehen.

Diese Aufgabe wird erfindungsgemäss dadurch gelöst, dass die Mittel zur aktiven Temperierung wenigstens 4 parallel konzentrisch im Wesentlichen auf Kreislinien geführte Kühlkanäle sowie wenigstens eine Zuführung für das Kühlmedium und wenigstens eine Abführung für das Kühlmedium umfassen, wobei die Kühlkanäle derart mit Zu- respektive Abführung verbunden sind, dass das in den Kühlkanälen geführte Kühlmedium nach nur einem Umlauf über die wenigstens eine Abführung aus der Spiegelplatte abgeführt wird.

Der Kern der Erfindung besteht folglich darin, die Oberflächentemperatur der Spiegelplatten durch möglichst kurze und damit schnell ansprechende Kühlkanäle zu beeinflussen. Zu diesem Zweck werden die auf Kreislinien geführten Kühlkanäle so vorgesehen, dass das durch sie geführte Kühlmedium nur einen Umlauf durchläuft, und anschliessend wieder abgeführt wird. Bei den typischerweise verwendeten spiralförmigen Kühlkanälen (welche unter anderem aus Gründen der Einfachheit der Versorgung mit Kühlmittel verwendet werden) besteht nämlich das Problem, dass das Kühlmittel in der Spiegelplatte einen langen Weg zurücklegen muss, und dass entsprechend die Effizienz der Temperierung respektive deren Ansprechzeit beschränkt ist. Durch die Anordnung einer Vielzahl von derartigen Kühlkanälen, welche parallel um das Symmetriezentrum der Spiegelplatte verlaufen, wird ausserdem eine homogene Kühlwirkung möglich. Typischerweise sollten wenigstens drei derartige Kühlkanäle vorgesehen werden, vorzugsweise aber wenigstens vier.

Besonders einfach im Hinblick auf die Versorgung mit dem Kühlmedium lässt sich eine derartige Konstruktion realisieren, wenn sämtliche Kühlkanäle über eine einzige Zuführung mit dem Kühlmedium versorgt werden. Dies ist nämlich typischerweise der Grund, warum Kühlkanäle spiralförmig vorgesehen werden, da dann naturgemäss einfach an einem Ende Kühlmittel eingeführt werden kann, und am anderen Ende abgeführt. Werden nun aber die parallel geführten konzentrischen Kühlkanäle parallel und über eine einzige, in der Spiegelplatte vorgesehene Zuführung mit Kühlmittel versorgt, so vereinfacht sich die Konstruktion wesentlich, und stellt gleichzeitig eine hohe Effizienz und Geschwindigkeit der Kühlung sicher. Bevorzugt werden die Kühlkanäle parallel zur der Spritzgussform zugewandten Oberfläche der Spiegelplatte und insbesondere in einem oberflächennahen Bereich angeordnet. Geometrisch lässt sich die Verwendung einer einzigen Zuführung realisieren, indem weiterhin bevorzugt die einzige Zuführung in der Spiegelplatte in einem oberflächenfernen Bereich angeordnet ist, und indem die Zuführung über Abzweigungen mit den Kühlkanälen verbunden ist.

Gemäss einer ersten bevorzugten, besonders kompakten und verlustfreien Ausführungsform wird die Zuführung im Wesentlichen in radialer Richtung in der Spiegelplatte angeordnet, und sämtliche Kühlkanäle werden über im Wesentlichen senkrecht zur der Spritzgussform zugewandten Oberfläche der Spiegelplatte angeordnete Abzweigungen mit dem Kühlmedium versorgt. Die Zuführung verfügt zur optimalen Versorgung der Kühlkanäle normalerweise über einen im Vergleich zu den Kühlkanälen und/oder zu den Abzweigungen grossen Durchflussquerschnitt. Werden dabei alle Abzweigungen und alle Kühlkanäle gleich dimensioniert, so resultiert, abgesehen von auf Druckabfälle und verschiedene Länge der Kühlkanäle (innerster Kreis ist am kürzesten) zurückzuführende Unterschiede, eine homogene Kühlwirkung über die ganze Spiegelplatte. Eine Berücksichtigung der Druckabfälle respektive der unterschiedlichen Länge der Kühlkanäle oder eine spezifische Strukturierung des Kühlprofils auf der Spiegelplatte kann bei einem derartigen Aufbau nun aber, obwohl nur eine einzige Zuführung vorhanden ist, in feiner Weise ermöglicht werden, indem beispielsweise sämtliche Kühlkanäle über identische Durchflussquerschnitte verfügen (einfache einheitliche Herstellung), und indem über entsprechend angepasste Durchflussquerschnitte der Abzweigungen der Fluss in einzelnen Kühlkanälen unterschiedlich eingestellt wird. Selbstverständlich kann eine ähnliche Wirkung erzeugt werden, wenn die Abzweigungen der Abführungen von den Kühlkanälen entsprechend im Durchflussquerschnitt unterschiedlich eingestellt werden. Auch eine Kombination dieser beiden Massnahmen ist denkbar. Die effektiven Durchflussquerschnitte der Abzweigungen können beispielsweise durch lokale Verengungen eingestellt werden (denkbar sind beispielsweise nach der Fertigung der Bohrungen vorzusehende Ringe, welche in die Bohrungen der Abzweigungen spezifisch eingeschoben und darin befestigt werden).

Eine besonders homogene Verteilung der Kühlwirkung lässt sich erreichen, wenn das Kühlmedium nach dem Gegenlaufprinzip durch die Kühlkanäle geschickt wird. Bevorzugtermassen werden entsprechend nebeneinander angeordnete Kühlkanäle alternierend in gegenläufiger Weise von Kühlmittel durchflossen. So läuft beispielsweise das Kühlmittel des zentralsten Kühlkanals (mit kleinstem Durchmesser) im Gegenuhrzeigersinn, im nächsten gegen den peripheren Bereich der Spiegelplatte angeordneten Kühlkanal im Uhrzeigersinn usf..

Für eine gleichmässige Kühlung reichen typischerweise höchstens 8, bevorzugt 4 bis 6 Kühlkanäle in jeweils einer Spiegelplatte nebeneinander. Die Kühlkanäle werden bevorzugt im Bereich von 4-10 mm unterhalb der der Spritzgussform zugewandten Oberfläche der Spiegelplatte vorgesehen. Bevorzugt werden der Einfachheit halber sämtliche Kühlkanäle im gleichen Abstand von der Oberfläche angeordnet. Es ist auch möglich, unterschiedliche Kühlleistungen in unterschiedlichen Bereichen der Spiegelplatte zu erreichen, indem die Kühlkanäle in unterschiedlichem Abstand von der Oberfläche vorgesehen werden.

Eine kompakte Anordnung der Abführung lässt sich bevorzugt erreichen, indem diese in einem oberflächenfemen Bereich der Spiegelplatte angeordnet ist, wobei diese Abführung über Abzweigungen mit den Kühlkanälen verbunden ist. Bevorzugtermassen werden zwei Abführungen vorgesehen, von welchen die eine das in einer Richtung in einer Hälfte der Kühlkanäle fliessende Kühlmedium abführt, und von welchen die andere das in der Gegenrichtung in der anderen Hälfte der Kühlkanäle fliessende Kühlmedium abführt (Gegenlaufprinzip der Kühlung).

Eine weitere bevorzugte Ausführungsform des erfindungsgemässen Spritzgusswerkzeuges ist dadurch gekennzeichnet, dass eine einzige Zuführung vorgesehen ist, und dass die 2 Abführungen oder wenigstens deren Abzweigungen derart seitlich neben der Zuführung in der Spiegelplatte angeordnet sind, dass, wenn sämtliche Kühlkanäle auf Kreislinien und jeweils in einem gleichen Abstand von der Oberfläche der Spiegelplatte geführt werden, gewissermassen eine Verzahnung der Einlässe respektive Auslässe in die Kühlkanäle resultiert. Im Zuführungsbereich kann so die Wirkung der Kühlung gleichmässiger gestaltet werden.

Weiterhin betrifft die vorliegende Erfindung ein Verfahren zur Herstellung von scheibenförmigen Formlingen, insbesondere in Form von Informationsträgern wie CDs und/oder DVDs, unter Verwendung eines Spritzgusswerkzeugs wie oben beschrieben, dadurch gekennzeichnet, dass im Fertigungsprozess die Oberfläche wenigstens eine, bevorzugt beide der Spiegelplatten über die Kühlkanäle auf einer definierten Prozesstemperatur gehalten werden, oder in gezielter Weise über den Prozess einem definierten Profil entsprechend geregelt respektive gefahren werden.

Weitere Ausführungsformen der erfindungsgemässen Spritzgussformrichtung respektive des erfindungsgemässen Verfahrens ergeben sich aus den abhängigen Ansprüchen.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: eine Aufsicht auf eine Spiegelplatte, wobei die darin geführten Kühlkanäle und deren Zuführungen respektive Ableitungen sichtbar gemacht sind;
- Fig. 2: in einem Längsschnitt ein bevorzugtes Ausführungsbeispiel eines Spritzgusswerkzeuges mit temperierten Spiegelplatten nach der Erfindung in einer vereinfachten Darstellung, wobei die relative Anordnung von Zuführung und Abführung zur einfacheren Darstellung verschoben dargestellt ist; und
- Fig. 3: zwei Schnitte gemäss der Linie A-A in Fig. 1, a) einen Schnitt durch eine Spiegelplatte gemäss Fig. 1, b) einen Schnitt durch eine Spiegelplatte mit schräger Abführung des Kühlmittels.

### WEGE ZUR AUSFÜHRUNG DER ERFINDUNG

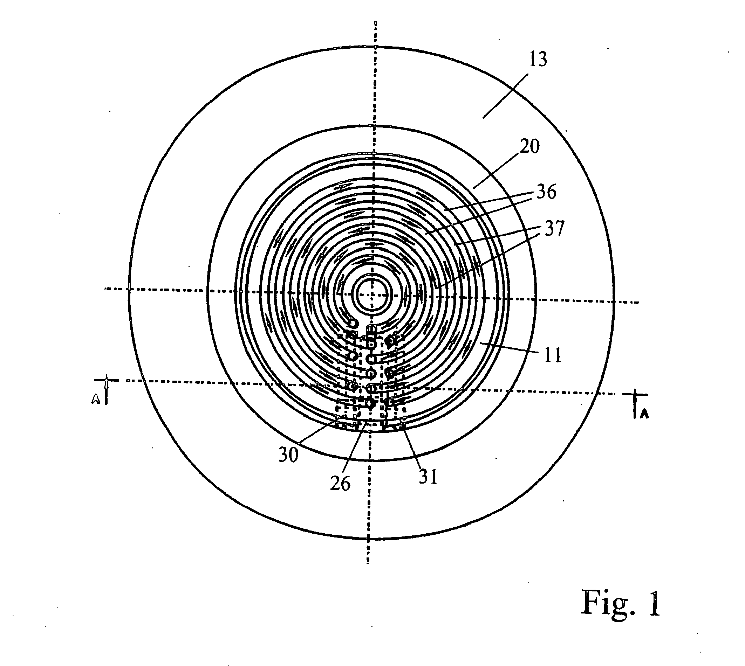

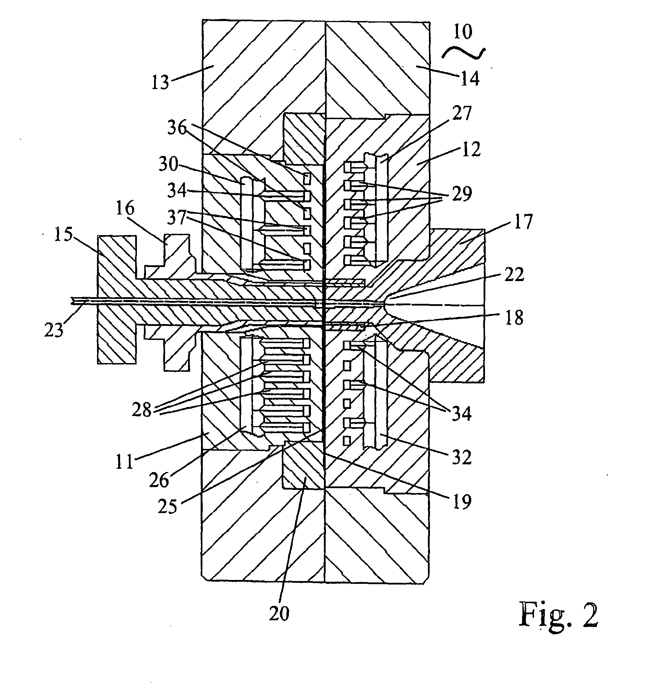

In den Fig. 1 und 2 ist ein bevorzugtes Ausführungsbeispiel eines Spritzgusswerkzeuges 10 nach der Erfindung wiedergegeben. Fig. 1 zeigt dabei eine Aufsicht auf die Spiegelplatte 11, und Fig. 2 einen Längsschnitt durch das gesamte Werkzeug. Die Figuren sind dabei insoweit vereinfacht, als auf die Darstellung der notwendigen Verschraubungen, Federn, Dichtungen und Bedienelemente verzichtet worden ist. Das im geschlossenen Zustand gezeigte Spritzgusswerkzeug 10 umfasst als zentrale Bestandteile eine erste (linke) Spiegelplatte 11, eine zweite (rechte) Spiegelplatte 12 und einen die erste Spiegelplatte 11 konzentrisch umschliessenden Formring (venting ring) 20, die zusammen die Spritzgussform 25 bilden. Die Spiegelplatten 11, 12 sind jeweils in einen sie konzentrisch umgebenden Zentrierring 13 bzw. 14 eingepasst. Die Information wird beim Spritzen in das Spritzgussteil (der Datenträger, die Disk) mittels eines Stampers 19 eingeprägt, der als dünne Scheibe an der Formfläche der zweiten Spiegelplatte 12 anliegt und im Zentrum durch einen buchsenförmigen Stamperhalter 18 gehalten wird. Für den Anschluss des Spritzgusswerkzeuges 10 an die Düse der (nicht dargestellten) Spritzgussmaschine ist eine durch das Zentrum der zweiten Spiegelplatte 12 bis in die Spritzgussform 25 reichende Angussbuchse 17 vorgesehen, die sich konisch nach aussen hin öffnet.

Der Angussbuchse 17 gegenüber sind konzentrisch ineinander liegend und (angedeutet durch die Doppelpfeile) relativ zueinander beweglich eine Ausstosshülse 16, eine Stanze 15 und ein Angussausstosser 23 angeordnet. Mit dem Angussausstosser 23 kann der in der inneren Bohrung der Angussbuchse 17 verbleibende Anguss 22 ausgestossen werden. Mit der Stanze 15 wird die zentrale Öffnung im gespritzten Datenträger ausgestanzt. Mit der Ausstosshülse 16 schliesslich kann der fertige Datenträger nach dem Öffnen der Spritzgussform 25 ausgestossen werden.

Der Formring 20 ist im Zentrierring 13 verschiebbar gelagert und wird durch (nicht dargestellte) Federn in Richtung auf die zweite Spiegelplatte 12 gedrückt. Er kann ggf. über ein pneumatisch angetriebenes Betätigungselement zurückgezogen werden. Der Formring 20 liegt dabei üblicherweise mit seiner Innenseite nicht direkt an der Aussenseite der ersten Spiegelplatte 11 an, sondern ist von dieser durch einen Gleitring getrennt, der konzentrisch auf der Aussenseite der ersten Spiegelplatte 11 in einem dafür vorgesehenen Absatz sitzt. Der Gleitring hat im Wesentlichen die Form eines Hohlzylinders und besteht vorzugsweise aus Kupfer, einer Kupferlegierung wie Bronze oder auch aus einem Kunsstoffinaterial wie Polytetrafluoroethylen (PTFE, Teflon). Er bildet damit für den aus Stahl bestehenden Formring 20 und die aus Stahl bestehende erste Spiegelplatte 11 ein thermisch gut leitendes Gleitlager, das im Randbereich der Spritzgussform 25 für eine verbesserte Wärmeabfuhr und damit für verbesserte optische und elektrische Werte im Aussenbereich des Datenträgers, der Disk, sorgt. Aufgrund der guten Gleiteigenschaften kann eine relativ enge Passung zwischen dem Gleitring und der ersten Spiegelplatte 11 gewählt werden, so dass die Gratbildung zwischen Spiegelplatte 11 und Formring 20 deutlich verringert wird. An Stelle eines Gleitringes kann aber auch ein Lager mit Kugeln (Kugelkäfig, Kugelgitter) verwendet werden. Die Verwendung eines Lagers mit Kugeln weist den Vorteil auf, dass möglicherweise vorhandenes Spiel besser auf den Umfang verteilt wird.

Der Formring hat die Funktion, den Aussenrand des optischen Datenträgersubstrates zu bilden. Gleichzeitig dient er zur Kavitätenentlüftung, welche über einen bestimmten Entlüftungsspalt (nicht dargestellt) eingearbeitet ist. Um den Spritzprägeprozess auszuführen, muss der Ventingring mit jedem Spritzvorgang (Zyklus) eine axiale Längsbewegung ausführen, um die Kavität des um den Prägespalt nicht geschlossenen Werkzeuges zu schliessen. Nach oder während des Einspritzens wird das Werkzeug über die Schliesskraft der Spritzgiessmaschine geschlossen und auf seine definierte Endposition gefahren. Dabei wird der Formring um den Weg des Prägespaltes zurückgeschoben. Nach Entnahme des Substrates und während des Schliessvorganges zum Starten eines neuen Spritzvorganges wird der Formring z.B. über Federkraft nach vorne geschoben.

Unterschiedliche Kunststoffmaterialien (COC, PMMA, PC etc.), Formate wie etwa CD-A-ROM, CD-R(W), DVD, DVD-R(W), Blue Ray etc., oder unterschiedliche Stamperbeschaffungen, verlangen Produktionstemperaturen von ca. 45 Grad Celsius bis 130 Grad Celsius. Es können sogar Temperaturen bis 300 Grad Celsius erforderlich sein.

Wie in Fig. 1 dargestellt, sind nun in der Spiegelplatte 11 (und gleichermassen 12) Mittel zur Kühlung, d. h. zu Abführung der im Produktionsprozess anfallenden Wärme vorgesehen. Das Kühlmittel wird dabei radial über einen einzigen Kanal, die Zuführung 26, welcher als Bohrung in der Masse der Spiegelplatte vorgesehen ist, eingeführt. Von dieser Zuführung 26 zweigen eine Vielzahl von Abzweigungen 28 gewissermassen parallel zur Achse der Spiegelplatte (in axialer Richtung) zu den individuellen Kühlkanälen 36 und 37 ab. Die Kühlkanäle 36 und 37 sind unterhalb der Oberfläche 38 der Spiegelplatte angeordnet. Sie sind dabei, wie aus Fig. 1 ersichtlich wird, derart an die Abzweigungen 28 angeschlossen, dass alternierend das Kühlmedium im Uhrzeigersinn (Kanäle 36) und im Gegenuhrzeigersinn (Kanäle 37) strömt. Das Kühlmedium durchfliesst die Spiegelplatte nur während eines Umlaufs, d. h. es findet keine spiralförmige Führung des Kühlmediums statt, sondern die einzelnen Kanäle sind auf Kreislinien parallel nebeneinander angeordnet, und nach einem Durchlaufen von etwas weniger als 360° wird das Kühlmedium wieder abgeführt.

Dies erfolgt durch entsprechende Abzweigungen 34 respektive 35. In diesem Zusammenhang ist zu bemerken, dass es sich bei Fig. 2 zur einfacheren Sichtbarkeit um einen V-Schnitt und nicht um einen reinen Längsschnitt handelt, denn Abführung und Zuführung sind normalerweise nicht gegenüberliegend angeordnet, sondern vielmehr, wie in Fig. 1 respektive 3 sichtbar, nebeneinander.

Nachdem das Kühlmedium beispielsweise im innersten Kühlkanal 37 im Gegenuhrzeigersinn einmal umgelaufen ist, wird es über die Abzweigung 34 in axialer Richtung abgeführt und dem ersten Abführungskanal 30 zugeführt, welcher seinerseits in radialer Richtung in der Masse der Spiegelplatte 11 vorgesehen ist. Andererseits wird das im nach aussen folgenden Kühlkanal 36 im Uhrzeigersinn geführte Kühlmedium über die Abzweigung 35 in einen weiteren Abführungskanal 31 geführt und abgeleitet.

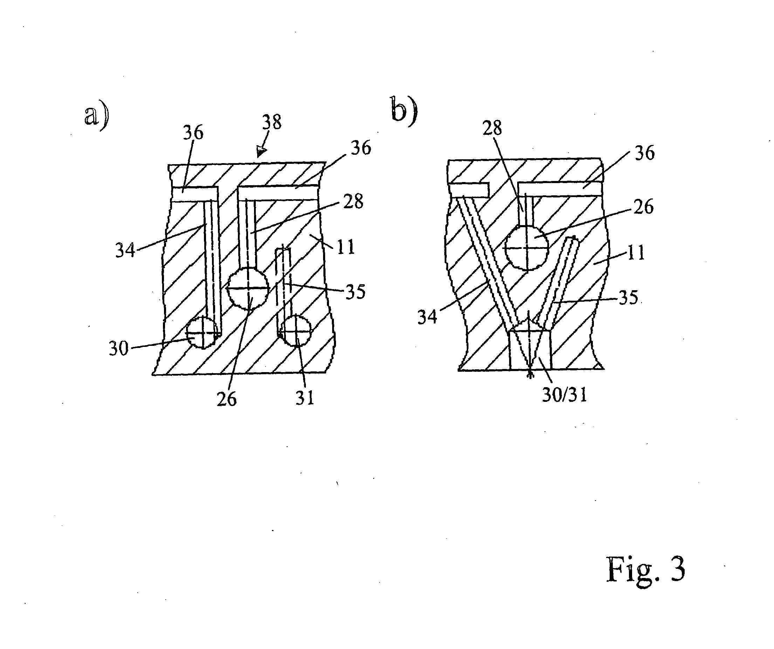

Die geometrische Anordnung von Zuführungskanal 26 (respektive 27) und den beiden Kanälen zur Abführung 30 und 31 in einer Anordnung gem. Fig. 1 respektive 2 ist in Fig. 3a) dargestellt. Zuführung 26 und Abführungen 30 respektive 31 befinden sich auf unterschiedlichen Ebenen, und werden mit den Kühlkanälen durch axiale Abzweigungen verbunden.

Fig. 3b) zeigt eine alternative Möglichkeit der Anbindung, hier werden nicht 2 Abführungen 30 und 31 verwendet, sondern eine einzige zentrale Abführung 30/31, wobei dann, der gegenläufigen Führung des Kühlmediums in den Kanäle 36 respektive 37 Rechnung tragend, die Abzweigungen 34 und 35 schräg vorgesehen werden müssen.

Wie in der Aufsicht gem. Fig. 1 sichtbar, wird durch die spezifische Führung von Zuführung und Abführung und durch den Gegenlauf des Kühlmittels gewissermassen eine Verzahnung der Kühlmittelkanäle im Zuführungsbereich bewirkt, was eine homogenere Verteilung der Kühlwirkung in diesem Bereich möglich macht.

Durch die aktive, über parallele Kühlkanäle mit jeweils nur einem Umlauf realisierte Temperierung der Spiegelplatte(n) kann nun eine Vielzahl von Vorteilen erreicht werden:
- Die geforderte Produktionstemperatur kann sehr rasch eingestellt werden (kurze Wege des Kühlmittels). Die Zykluszeiten können entsprechend erhöht werden (typischerweise können die Zykluszeiten um bis zu 10 bis 20 Prozent verkürzt werden).
- Die kurzen Kühlkanäle erlauben eine sehr wirksame Abführung der anfallenden Wärme. Es wird eine höhere Kühlleistung als bei spiralförmiger Führung erzielt. Der Temperaturunterschied zwischen Eingang und Ausgang bleibt entsprechend gering, es resultiert eine erhöhte Homogenität der Kühlung.
- Das Kühlmedium kann gegenläufig oder gleichläufig in den Kanälen geführt werden.
- Es ist nur ein Kryostat (Temperiereinheit) erforderlich, da nur eine Zuleitung vorgesehen ist.
- Die einzelne Zuführung vereinfacht die Konstruktion.
- In den Abzweigungen 28 respektive 29 und 35 respektive 36 können ausserdem spezifische Verengungen vorgesehen werden, welche eine unterschiedliche Einstellung der Kühlwirkung in unterschiedlichen Kreisringen möglich macht. Dies ohne dass dadurch die Verwendung unterschiedlicher Kryostaten erforderlich wird.
- Die parallele und nicht spiralförmige Führung der Kühlkanäle führt zu einer homogeneren Temperaturverteilung auf der Oberfläche der Spiegelplatten. Probleme wie Doppelbrechnung, Dishing, Jitter, Abformung etc. werden dadurch vermindert.

Besonders vorteilhaft lässt sich das System auch im Zusammenhang mit Impulskühlung verwenden, bei welcher das Kühlmedium nicht kontinuierlich zirkuliert wird, sondern in Abhängigkeit des Prozessstadiums schubweise geführt wird. So kann beispielsweise während oder unmittelbar nach dem Einschiessen der Polymere in einem Schub das Kühlsystem mit kühlem Kühlmedium gefüllt werden, so dass die Wärme durch dieses aufgenommen wird. Dieses warme Kühlmedium wird aber anschliessend zunächst in der Spiegelplatte gelassen, um sicherzustellen, dass im nächsten Zyklus eingeschossenes Polymer nicht in einen zu stark abgekühlten Hohlraum eintritt und entsprechend eine ungenügende Ausformung der Pits und Grooves resultiert.

### BEZUGSZEICHENLISTE

- 10: Spritzgusswerkzeug
- 11: erste Spiegelplatte (mirror block)
- 12: zweite Spiegelplatte (mirror block)
- 13,14: Zentrierring (centering ring)
- 15: Stanze (punch)
- 16: Ausstosshülse (ejector sleeve)
- 17: Angussbuchse (sprue bush)
- 18: Stamperhalter (stamper holder)
- 19: Stamper
- 20: Formring (form or venting ring)
- 22: Anguss
- 23: Angussausstosser
- 25: Spritzgussform (Hohlraum)
- 26: Zuführungskanal für Temperiermedium für 11
- 27: Zufiihrungskanal für Temperiermedium für 12
- 28: Abzweigungen von 26
- 29: Abzweigungen von 27
- 30: erster Abführungskanal für Temperiermedium für 11
- 31: zweiter Abführungskanal für Temperiermedium für 11
- 32: erster Abführungskanal für Temperiermedium für 12
- 33: zweiter Abführungskanal für Temperiermedium für 11
- 34: Abzweigungen von 30/32
- 35: Abzweigungen von 31/33
- 36: erste Kühlkanäle
- 37: zweite Kühlkanäle
- 38: Oberfläche von 11

## Patentansprüche

1. Spritzgusswerkzeug (10) für die Herstellung von scheibenförmigen Formlingen, insbesondere in Form von Informationsträgern wie CDs und/oder DVDs, welches Spritzgusswerkzeug (10) zur Bildung einer Spritzgussform (25) eine erste und eine zweite Spiegelplatte (11 bzw. 12) umfasst, die einander gegenüberliegen und zum Öffnen und Schliessen der Form relativ zueinander beweglich sind, wobei Mittel (26-37) zur aktiven Temperierung wenigstens einer der Spiegelplatten (11,12) vorgesehen sind,
**dadurch gekennzeichnet, dass**
die Mittel (26-37) wenigstens 4 parallel konzentrisch im Wesentlichen auf Kreislinien geführte Kühlkanäle (36,37) sowie eine Zuführung (26) für Kühlmedium und wenigstens eine Abführung (30,31) für das Kühlmedium umfassen, wobei sämtliche Kühlkanäle (36,37) über eine einzige, in der Spiegelplatte (11, 12) vorgesehene Zuführung (26) mit dem Kühlmedium versorgt werden und wobei die Kühlkanäle (36,37) derart mit Zu- respektive Abführung verbunden sind, dass das in den Kühlkanälen (36,37) geführte Kühlmedium nach nur einem Umlauf über die wenigstens eine Abführung (30,31) aus der Spiegelplatte (11,12) abgeführt wird.

2. Spritzgusswerkzeug (10) nach Anspruch 1, **dadurch gekennzeichnet, dass** die Kühlkanäle (36,37) parallel zur der Spritzgussform (25) zugewandten Oberfläche (38) der Spiegelplatte (11, 12) und insbesondere in einem oberflächennahen Bereich angeordnet sind, und wobei weiterhin bevorzugt die einzige Zuführung (26) in der Spiegelplatte (11, 12) in einem oberflächenfernen Bereich angeordnet ist, welche über Abzweigungen (28, 29) mit den Kühlkanälen (36,37) verbunden ist.

3. Spritzgusswerkzeug (10) nach einem der vorhergehenden Ansprüche, **dadurch gekennzeichnet, dass** die Zuführung (26) im Wesentlichen in radialer Richtung in der Spiegelplatte (11, 12) angeordnet ist, und dass sämtliche Kühlkanäle (36,37) über im Wesentlichen senkrecht zur der Spritzgussform (25) zugewandten Oberfläche (38) der Spiegelplatte (11, 12) angeordnete Abzweigungen (28, 29) mit Kühlmedium versorgt werden.

4. Spritzgusswerkzeug (10) nach einem der Ansprüche 2 oder 3, **dadurch gekennzeichnet, dass** die Zuführung (26) über einen im Vergleich zu den Kühlkanälen (36,37) und/oder zu den Abzweigungen (28, 29) grossen Durchflussquerschnitt verfügt, und dass insbesondere bevorzugt weiterhin sämtliche Kühlkanäle (36,37) über identische Durchflussquerschnitte verfügen, und dass über entsprechend angepasste Durchflussquerschnitte der Abzweigungen (28, 29) der Fluss in einzelnen Kühlkanälen (36,37) unterschiedlich eingestellt ist.

5. Spritzgusswerkzeug (10) nach Anspruch 4, **dadurch gekennzeichnet, dass** die effektiven Durchflussquerschnitte der Abzweigungen (28, 29) durch lokale Verengungen eingestellt sind.

6. Spritzgusswerkzeug (10) nach einem der vorhergehenden Ansprüche, **dadurch gekennzeichnet, dass** die nebeneinander angeordneten Kühlkanäle (36,37) alternierend in gegenläufiger Weise von Kühlmittel durchflossen werden.

7. Spritzgusswerkzeug (10) nach einem der vorhergehenden Ansprüche, **dadurch gekennzeichnet, dass** höchstens 8, bevorzugt 4 bis 6 Kühlkanäle (36,37) in jeweils einer Spiegelplatte (11,12) nebeneinander angeordnet sind, und dass die Kühlkanäle (36,37) bevorzugt im Bereich von 4-10 mm unterhalb der der Spritzgussform (25) zugewandten Oberfläche (38) der Spiegelplatte (11, 12) vorgesehen sind, wobei bevorzugt sämtliche Kühlkanäle (36,37) im gleichen Abstand von der Oberfläche (38) angeordnet sind.

8. Spritzgusswerkzeug (10) nach einem der vorhergehenden Ansprüche, **dadurch gekennzeichnet, dass** die wenigstens eine Abführung (30, 31) in einem oberflächenfemen Bereich der Spiegelplatte (11, 12) angeordnet ist, und dass diese Abführung (30, 31) über Abzweigungen (34, 35) mit den Kühlkanälen (36,37) verbunden ist, wobei bevorzugt 2 Abführungen (30, 31) vorgesehen sind, von welchen die eine (30) das in einer Richtung in einer Hälfte der Kühlkanäle (37) fliessende Kühlmedium abführt, und von welchen die andere (31) das in der Gegenrichtung in der anderen Hälfte der Kühlkanäle (36) fliessende Kühlmedium abführt.

9. Spritzgusswerkzeug (10) nach Anspruch 8, **dadurch gekennzeichnet, dass** eine einzige Zuführung (26) vorgesehen ist, und dass die 2 Abführungen (30, 31) oder wenigstens deren Abzweigungen (34, 35) derart seitlich neben der Zuführung (26) in der Spiegelplatte (11, 12) angeordnet sind, dass, wenn sämtliche Kühlkanäle (36,37) auf Kreislinien und jeweils in einem gleichen Abstand von der Oberfläche (38) der Spiegelplatte (11, 12) geführt werden, in radialer Richtung eine Verzahnung der Einlässe respektive Auslässe in die Kühlkanäle (36,37) resultiert.

10. Spritzgusswerkzeug (10) nach einem der vorhergehenden Ansprüche, **dadurch gekennzeichnet, dass** als Kühlmedium Dampf, Wasser oder organische Verbindungen wie insbesondere Öl, gegebenenfalls mit Zusätzen versehen, in den Kühlkanälen (36,37) vorgesehen ist, wobei bevorzugt das Kühlmedium über eine einzige Zuleitung von einer einzigen Temperiereinheit zur Verfügung gestellt wird.

11. Spritzgusswerkzeug (10) nach einem der vorhergehenden Ansprüche, **dadurch gekennzeichnet, dass** ein Formring (20) vorgesehen ist, welcher die erste Spiegelplatte (11) konzentrisch umschliesst und die Spritzgussform (25) zum äusseren Rand hin abschliesst und relativ zur ersten Spiegelplatte (11) beweglich ist, wobei bevorzugt zweite, insbesondere im Inneren des Formrings (20) angeordnete Mittel zur Temperierung dieses Formrings (20) vorgesehen sind.

12. Spritzgusswerkzeug (10) nach Anspruch 11, **dadurch gekennzeichnet, dass** die zweiten Mittel (26) die Temperierung elektrisch und/oder mit Hilfe eines Temperiermediums (32) bewirken.

13. Spritzgusswerkzeug (10) nach einem der Ansprüche 11 oder 12, **dadurch gekennzeichnet, dass** das Werkzeug einen konzentrisch zwischen der ersten Spiegelplatte (11) und dem sie umschliessenden Formring (20) angeordneten Gleitring oder ein Gleitlager (21) umfasst.

14. Verfahren zur Herstellung von scheibenförmigen Formlingen, insbesondere in Form von Informationsträgern wie CDs und/oder DVDs, unter Verwendung eines Spritzgusswerkzeugs (10) gemäss einem der vorhergehenden Ansprüche, **dadurch gekennzeichnet, dass** im Fertigungsprozess die Oberfläche (38) wenigstens einer, bevorzugt beider der Spiegelplatten (11, 12) über die Kühlkanäle (36,37) auf einer definierten Prozesstemperatur gehalten wird, oder in gezielter Weise über den Prozess einem definierten Profil entsprechend geregelt respektive gefahren wird.

## Claims

1. Injection-moulding tool (10) for the production of mouldings in disc form, in particular in the form of information carriers such as CDs and/or DVDs, which injection-moulding tool (10), to form an injection mould (25), comprises a first and a second mirror block (11 or 12, respectively), which lie opposite each other and are movable in relation to each other for the opening and closing of the mould, means (26-37) for actively controlling the temperature of at least one of the mirror blocks (11, 12) being provided, **characterized in that** the means (26-37) comprise at least 4 cooling channels (36, 37) which are made to follow parallel concentric paths essentially on circular lines and also one feed (26) for cooling medium and at least one discharge (30, 31) for the cooling medium, wherein all the cooling channels (36,37) are supplied with the cooling medium via a single feed (26) provided in the mirror block (10,11), the cooling channels (36, 37) being connected to the feed and discharge, respectively, in such a way that the cooling medium carried in the cooling channels (36, 37) is discharged from the mirror block (11, 12) via the at least one discharge (30, 31) after circulating only once.

2. Injection-moulding tool (10) according to Claim 1, **characterized in that** the cooling channels (36, 37) are arranged parallel to the surface (38) of the mirror block (11, 12) that is facing the injection mould (35) and in particular in a region near the surface, and it being preferred for the single feed (26) to be arranged in the mirror block (11, 12) in a region away from the surface and to be connected to the cooling channels (36, 37) via branches (28, 29).

3. Injection-moulding tool (10) according to one of the preceding claims, **characterized in that** the feed (26) is arranged in the mirror block (11, 12) essentially in the radial direction, and **in that** all the cooling channels (36, 37) are supplied with cooling medium via branches (28, 29) arranged essentially perpendicular to the surface (38) of the mirror block (11, 12) that is facing the injection mould (25).

4. Injection-moulding tool (10) according to either of Claims 2 and 3, **characterized in that** the feed (26) has a large flow cross section in comparison with the cooling channels (36, 37) and/or the branches (28, 29), and **in that** it is also particularly preferred for all the cooling channels (36, 37) to have identical flow cross sections, and **in that** the flow in the individual cooling channels (36, 37) is differently set by means of correspondingly adapted flow cross sections of the branches (28, 29).

5. Injection-moulding tool (10) according to Claim 4, **characterized in that** the effective flow cross sections of the branches (28, 29) are set by local constrictions.

6. Injection-moulding tool (10) according to one of the preceding claims, **characterized in that** the cooling channels (36, 37) arranged next to one another are alternately flowed through by cooling medium in a counter-running way.

7. Injection-moulding tool (10) according to one of the preceding claims, **characterized in that** a maximum of 8, preferably 4 to 6, cooling channels (36, 37) are arranged next to one another in a respective mirror block (11, 12), and **in that** it is preferred for the cooling channels (36, 37) to be provided in the range of 4-10 mm underneath the surface (38) of the mirror block (11, 12) that is facing the injection mould (25), it being preferred for all the cooling channels (36, 37) to be arranged at the same distance from the surface (38).

8. Injection-moulding tool (10) according to one of the preceding claims, **characterized in that** the at least one discharge (30, 31) is arranged in a region away from the surface of the mirror block (11, 12), and **in that** this discharge (30, 31) is connected to the cooling channels (36, 37) via branches (34, 35), it being preferred for 2 discharges (30, 31) to be provided, one of which (30) discharges the cooling medium flowing in one direction in one half of the cooling channels (37), and the other of which (31) discharges the cooling medium flowing in the opposite direction in the other half of the cooling channels (36).

9. Injection-moulding tool (10) according to Claim 8, **characterized in that** a single feed (26) is provided, and **in that** the 2 discharges (30, 31) or at least their branches (34, 35) are arranged in the mirror block (11, 12) laterally alongside the feed (26) in such a way that, when all the cooling channels (36, 37) are made to follow circular lines and are in each case at the same distance from the surface (38) of the mirror block (11, 12), an interlocking of the inlets and outlets in the cooling channels (36, 37) results in the radial direction.

10. Injection-moulding tool (10) according to one of the preceding claims, **characterized in that** steam, water or organic compounds, such as oil in particular, if need be provided with additives, is provided in the cooling channels (36, 37) as cooling medium, it being preferred for the cooling medium to the provided via a single feed line from a single temperature-control unit.

11. Injection-moulding tool (10) according to one of the preceding claims, **characterized in that** a form ring (20) is provided, concentrically enclosing the first mirror block (11), closing the injection mould (25) towards the outer edge and being movable in relation to the first mirror block (11), it being preferred for second means to be provided, for controlling the temperature of this form ring (20), arranged in particular in the interior of the form ring (20).

12. Injection-moulding tool (10) according to Claim 11, **characterized in that** the second means (26) bring about the temperature control electrically and/or with the aid of a temperature-control medium (32).

13. Injection-moulding tool (10) according to either of Claims 11 and 12, **characterized in that** the tool comprises a sliding ring or a sliding bearing (21) arranged concentrically between the first mirror block (11) and the form ring (20) enclosing it.

14. Method for producing mouldings in disc form, in particular in the form of information carriers such as CDs and/or DVDs, using an injection-moulding tool (10) according to one of the preceding claims, **characterized in that,** in the production process, the surface (38) of at least one, preferably both, of the mirror blocks (11, 12) is kept at a defined process temperature by means of the cooling channels (36, 37), or is controlled or operated in a specifically selective way over the process in a manner corresponding to a defined profile.

## Revendications

1. Outil de moulage par injection (10) pour la fabrication de pièces moulées en forme de disques, notamment en forme de supports d'information comme des CD et/ou des DVD, lequel outil de moulage par injection (10), pour former un moule d'injection (25), comprend une première et une deuxième plaque formant miroir (11, respectivement 12), qui sont en regard l'une de l'autre et qui peuvent être déplacées relativement l'une par rapport à l'autre pour ouvrir et fermer le moule, des moyens (26-37) étant prévus pour l'équilibrage de la température d'au moins l'une des plaques formant miroir (11, 12),
**caractérisé en ce que** les moyens (26-37) comprennent au moins 4 canaux de refroidissement (36, 37) guidés parallèlement et concentriquement essentiellement sur des lignes circulaires, ainsi qu'une alimentation (26) pour du fluide de refroidissement et au moins une évacuation (30, 31) pour le fluide de refroidissement, tous les canaux de refroidissement (36, 37) étant alimentés par le biais d'une alimentation (26) unique, prévue dans la plaque formant miroir (11, 12), en fluide de refroidissement, et les canaux de refroidissement (36, 37) étant connectés à l'alimentation ou, respectivement, à l'évacuation, de telle sorte que le fluide de refroidissement guidé dans les canaux de refroidissement (36, 37) soit évacué hors de la plaque formant miroir (11, 12) après seulement une circulation par le biais de l'au moins une évacuation (30, 31).

2. Outil de moulage par injection (10) selon la revendication 1, **caractérisé en ce que** les canaux de refroidissement (36, 37) sont disposés parallèlement à la surface (38) de la plaque formant miroir (11, 12) tournée vers le moule d'injection (25), et en particulier dans une région proche de la surface, et en outre de préférence l'alimentation unique (26) est disposée dans la plaque formant miroir (11, 12) dans une région éloignée de la surface, qui est connectée par le biais de branchements (28, 29) aux canaux de refroidissement (36, 37).

3. Outil de moulage par injection (10) selon l'une quelconque des revendications précédentes, **caractérisé en ce que** l'alimentation (26) est disposée essentiellement dans la direction radiale dans la plaque formant miroir (11, 12), et **en ce que** tous les canaux de refroidissement (36, 37) sont alimentés en fluide de refroidissement par le biais de branchements (28, 29) disposés essentiellement perpendiculairement à la surface (38) de la plaque formant miroir (11, 12) tournée vers le moule d'injection (25).

4. Outil de moulage par injection (10) selon l'une quelconque des revendications 2 ou 3, **caractérisé en ce que** l'alimentation (26) dispose d'une section transversale d'écoulement assez grande par rapport aux canaux de refroidissement (36, 37) et/ou aux branchements (28, 29), et **en ce que** notamment de préférence en outre tous les canaux de refroidissement (36, 37) disposent de sections transversales d'écoulement identiques, et **en ce que** le flux dans les canaux de refroidissement individuels (36, 37) est ajusté de manière différente par le biais de sections transversales d'écoulement des branchements (28, 29) adaptées en conséquence.

5. Outil de moulage par injection (10) selon la revendication 4, **caractérisé en ce que** les sections transversales effectives des branchements (28, 29) sont ajustées par des rétrécissements locaux.

6. Outil de moulage par injection (10) selon l'une quelconque des revendications précédentes, **caractérisé en ce que** les canaux de refroidissement (36, 27) sont parcourus par le fluide de refroidissement de manière alternée en sens inverse.

7. Outil de moulage par injection (10) selon l'une quelconque des revendications précédentes, **caractérisé en ce que,** au plus 8, de préférence 4 à 6 canaux de refroidissement (36, 37) sont disposés les uns à côté des autres dans une plaque formant miroir respective (11, 12), et **en ce que** les canaux de refroidissement (36, 37) sont disposés de préférence dans une région de 4 à 10 mm en dessous de la surface (38) de la plaque formant miroir (11, 12) tournée vers le moule d'injection (25), tous les canaux de refroidissement (36, 37) étant disposés de préférence à la même distance de la surface (38).

8. Outil de moulage par injection (10) selon l'une quelconque des revendications précédentes, **caractérisé en ce que** l'au moins une évacuation (30, 31) est disposée dans une région de la plaque formant miroir (11, 12) éloignée de la surface, et **en ce que** cette évacuation (30, 31) est connectée par le biais de branchements (34, 35) aux canaux de refroidissement (36, 37), 2 évacuations (30, 31) étant de préférence prévues, dont l'une (30) évacue le fluide de refroidissement s'écoulant dans une direction dans une moitié des canaux de refroidissement (37) et dont l'autre (31) évacue le fluide de refroidissement s'écoulant dans le sens opposé dans l'autre moitié des canaux de refroidissement (36).

9. Outil de moulage par injection (10) selon la revendication 8, **caractérisé en ce qu'**une alimentation unique (26) est prévue, et **en ce que** les 2 évacuations (30, 31) ou au moins leurs branchements (34, 35) sont disposés latéralement à côté de l'alimentation (26) dans la plaque formant miroir (11, 12) de telle sorte que lorsque tous les canaux de refroidissement (36, 37) sont guidés sur des lignes circulaires et à chaque fois à une même distance de la surface (38) de la plaque formant miroir (11, 12), il en résulte dans la direction radiale une formation dentelée des entrées, respectivement des sorties dans les canaux de refroidissement (36, 37).

10. Outil de moulage par injection (10) selon l'une quelconque des revendications précédentes, **caractérisé en ce que** l'on utilise comme fluide de refroidissement de la vapeur, de l'eau ou des composés organiques comme en particulier de l'huile, éventuellement avec des additifs, dans les canaux de refroidissement (36, 37), et de préférence le fluide de refroidissement est fourni par le biais d'une alimentation unique à partir d'une unité unique d'équilibrage de la température.

11. Outil de moulage par injection (10) selon l'une quelconque des revendications précédentes, **caractérisé en ce que** l'on prévoit un anneau de moulage (20) qui entoure concentriquement la première plaque formant miroir (11) et qui termine le moule d'injection (25) vers le bord extérieur et qui est déplaçable par rapport à la première plaque formant miroir (11), et de préférence des deuxièmes moyens disposés notamment à l'intérieur de l'anneau de moulage (20) sont prévus pour équilibrer la température cet anneau de moulage (20).

12. Outil de moulage par injection (10) selon la revendication 11, **caractérisé en ce que** les deuxièmes moyens (26) provoquent l'équilibrage de la température de manière électrique et/ou à l'aide d'un agent d'équilibrage de la température (32).

13. Outil de moulage par injection (10) selon l'une quelconque des revendications 11 ou 12, **caractérisé en ce que** l'outil comprend un anneau de glissement ou un palier lisse (21) disposé concentriquement entre la première plaque formant miroir (11) et l'anneau de moulage (20) qui l'entoure.

14. Procédé de fabrication de pièces moulées en forme de disques, notamment en forme de supports d'information comme des CD et/ou des DVD, utilisant un outil de moulage par injection (10) selon l'une quelconque des revendications précédentes, **caractérisé en ce que** dans le processus de fabrication, la surface (38) d'au moins une, et de préférence des deux plaques formant miroir (11, 12), est maintenue par le biais des canaux de refroidissement (36, 37) à une température de traitement définie, ou est réglée ou entraînée en conséquence de manière spécifique par le biais du processus suivant un profil défini.
